# EUROPEAN PATENT APPLICATION

(11) **EP 4 848 676 A1**
(43) Date of publication of application: **02.12.2026**
(21) Application number: 24921558.3
(22) Date of filing: 28.10.2024
(51) Int. Cl.: H04L 27/26

(54) **DATA TRANSMISSION METHOD, COMMUNICATION APPARATUS AND STORAGE MEDIUM**

(30) Priority: 01.02.2024 CN 202410154267
(71) Applicant: ZTE Corporation, Shenzhen, Guangdong 518057 (CN)
(72) Inventor: XIN, Yu, Shenzhen, Guangdong 518057 (CN); HUA, Jian, Shenzhen, Guangdong 518057 (CN); BAO, Tong, Shenzhen, Guangdong 518057 (CN)
(74) Representative: Ziebig Hengelhaupt Intellectual Property Attorneys Patentanwaltskanzlei PartGmbB
(86) International application number: PCT/CN2024/127731
(87) International publication number: WO 2025/161534

(57) **Abstract**

Provided are a data transmission method, a communication apparatus and a storage medium. The data transmission method comprises: dividing data to be transmitted into N first sequences (S101), wherein among the N first sequences, M first sequences each correspond to a single-carrier sub-band, and K first sequences each correspond to a multi-carrier sub-band, N being a positive integer, M being a positive integer less than N, and K being equal to N-M, and within one time domain symbol length, the number of data of a first sequence corresponding to a multi-carrier sub-band adjacent to a single-carrier sub-band is less than the number of data of a first sequence corresponding to the single-carrier sub-band; obtaining K second sequences on the basis of the K first sequences (S102); obtaining a time domain data sequence on the basis of the K second sequences and the M first sequences (S103); and transmitting the time domain data sequence on transmission resources of the data to be transmitted (S104).

## Description

The present disclosure claims a priority to Chinese Patent Application No. 202410154267. X, filed on February 01, 2024, the entire content of which is incorporated into the present application by reference.

### TECHNICAL FIELD

The present disclosure relates to the field of communication technologies, and in particular, to a data transmission method, a communication apparatus, and a storage medium.

### BACKGROUND

With the development of communication technologies, the frequency band used by future 6th-generation mobile communication technology (6G) services span a wide range, and the deployment manners are also diverse. Not only multi-bandwidth channels are required, but also waveform schemes for different scenarios need to be satisfied. Each waveform scheme being implemented independently will increase the cost of the base station/terminal.

### SUMMARY

In an aspect, the embodiments of the present disclosure provide a data transmission method. The data transmission method includes:
dividing to-be-transmitted data into N first sequences; where, among the N first sequences, M first sequences each correspond to a single-carrier subband, K first sequences each correspond to a multi-carrier subband, N is a positive integer, M is a positive integer less than N, and K is equal to N-M; within a time-domain symbol length, a number of data of a first sequence corresponding to a multi-carrier subband adjacent to a single-carrier subband is less than a number of data of a first sequence corresponding to the single-carrier subband;
obtaining K second sequences based on the K first sequences; where the K second sequences include: a second sequence obtained by sequentially performing a zero-padding operation and a first inverse Fourier transform on the first sequence corresponding to a multi-carrier subband adjacent to the single-carrier subband, and a second sequence obtained by performing a first inverse Fourier transform on the first sequence corresponding to a multi-carrier subband non-adjacent to the single-carrier subband;
obtaining a time-domain data sequence based on the K second sequences and the M first sequences; and
transmitting the time-domain data sequence on a transmission resource of the to-be-transmitted data.

In another aspect, the embodiments of the present disclosure provide a data transmission method. The data transmission method includes:
transmitting data on a channel bandwidth; where the channel bandwidth includes W subbands, among the W subbands, M subbands are single-carrier subbands, K subbands are multi-carrier subbands, M is less than or equal to N, N is less than or equal to W, K is equal to N-M, and N, W, M are all positive integers; and
within a time-domain symbol length, a number of data in a first sequence corresponding to a multi-carrier subband adjacent to a single-carrier subband is less than a number of subcarriers of the multi-carrier subband; a number of data in a first sequence corresponding to a multi-carrier subband non-adjacent to a single-carrier subband is equal to a number of subcarriers of the multi-carrier subband; and a number of data in a first sequence corresponding to the single-carrier subband is equal to the number of subcarriers of the multi-carrier subband.

In yet another aspect, the embodiments of the present disclosure provide a data transmission apparatus. The data transmission apparatus includes: a processing module and a communication module;
the processing module, configured to divide to-be-transmitted data into N first sequences; where, among the N first sequences, M first sequences each correspond to a single-carrier subband, K first sequences each correspond to a multi-carrier subband, N is a positive integer, M is a positive integer less than N, and K is equal to N-M; within a time-domain symbol length, a number of data of a first sequence corresponding to a multi-carrier subband adjacent to a single-carrier subband is less than a number of data of a first sequence corresponding to the single-carrier subband;
the processing module, further configured to obtain K second sequences based on the K first sequences; where the K second sequences include: a second sequence obtained by sequentially performing a zero-padding operation and a first inverse Fourier transform on the first sequence corresponding to a multi-carrier subband adjacent to the single-carrier subband, and a second sequence obtained by performing a first inverse Fourier transform on the first sequence corresponding to a multi-carrier subband non-adjacent to the single-carrier subband;
the processing module, further configured to, obtain a time-domain data sequence based on the K second sequences and the M first sequences; and
the communication module, configured to transmit the time-domain data sequence on a transmission resource of the to-be-transmitted data.

In yet another aspect, the embodiments of the present disclosure provide a data transmission apparatus. The data transmission apparatus includes: a communication module;
the communication module, configured to transmit the time-domain data sequence on a transmission resource of the to-be-transmitted data;
data is transmitted on a channel bandwidth; where the channel bandwidth includes W subbands, among the W subbands, M subbands are single-carrier subbands, K subbands are multi-carrier subbands, M is less than or equal to N, N is less than or equal to W, K is equal to N-M, and N, W, M are all positive integers; and
within a time-domain symbol length, a number of data in a first sequence corresponding to a multi-carrier subband adjacent to a single-carrier subband is less than a number of subcarriers of the multi-carrier subband; a number of data in a first sequence corresponding to a multi-carrier subband non-adjacent to a single-carrier subband is equal to a number of subcarriers of the multi-carrier subband; and a number of data in a first sequence corresponding to the single-carrier subband is equal to the number of subcarriers of the multi-carrier subband.

In yet another aspect, the embodiments of the present disclosure provide a communication apparatus. The communication apparatus includes: a memory and a processor; the memory is coupled with the processor; the memory is configured to store computer program instructions executable by the processor; and the processor, upon executing the computer program instructions, implements the data transmission method described in any one of the embodiments.

In yet another aspect, the embodiments of the present disclosure provide a computer readable storage medium, and the computer readable storage medium has stored computer program instructions thereon, and the computer program instructions, upon being executed on a computer (e.g., a communication apparatus or a signal transmission apparatus), implement the data transmission method described in any one of the embodiments.

In yet another aspect, the embodiments of the present disclosure provide a computer program product, and the computer program product includes computer program instructions, and the computer program instructions, upon being executed, implement the data transmission method described in any one of the embodiments.

### BRIEF DESCRIPTION OF THE DRAWINGS

FIG. 1 is a schematic diagram of an architecture of a communication system according to some embodiments.
FIG. 2 is a flow chart of a data transmission method according to some embodiments.
FIG. 3 is a process schematic diagram of a data transmission according to some embodiments.
FIG. 4 is a process schematic diagram of another data transmission according to some embodiments.
FIG. 5 is a process schematic diagram of yet another data transmission according to some embodiments.
FIG. 6 is a process schematic diagram of yet another data transmission according to some embodiments.
FIG. 7 is a process schematic diagram of yet another data transmission according to some embodiments.
FIG. 8 is a process schematic diagram of yet another data transmission according to some embodiments.
FIG. 9 is a process schematic diagram of yet another data transmission according to some embodiments.
FIG. 10 is a process schematic diagram of yet another data transmission according to some embodiments.
FIG. 11 is a process schematic diagram of yet another data transmission according to some embodiments.
FIG. 12 is a structural schematic diagram of a data transmission apparatus according to some embodiments.
FIG. 13 is a structural schematic diagram of another data transmission apparatus according to some embodiments.
FIG. 14 is a structural schematic diagram of a communication apparatus according to some embodiments.

### DETAILED DESCRIPTION

The technical solutions in the embodiments of the present disclosure will be described clearly and completely below in conjunction with the drawings in the embodiments of the present disclosure. Obviously, the described embodiments are only a part of the embodiments of the present disclosure, not all of the embodiments. Based on the embodiments in the present disclosure, all other embodiments obtained by those ordinary skilled without creative efforts shall fall within the protection scope of the present disclosure.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, both A and B, and only B. In addition, "at least one" means one or more, and the "more" or variants thereof means two or more. Words, such as "first" and "second", etc., do not limit the quantity and execution order, and the words, such as "first" and "second", etc., also do not necessarily limit different items.

It should be noted that in the present disclosure, the expressions such as "exemplary/exemplarily" or "for example" are used to present an example, illustration, or explanation. Any embodiment or design scheme described with "exemplary/exemplarily" or "for example", etc., in the present disclosure should not be construed as preferred or advantageous over other embodiments or design schemes. Rather, the usage of the expressions, such as "exemplary/exemplarily" or "for example", etc., is intended to present relevant concepts in a detailed manner.

Long term evolution (Long Term Evolution, LTE) is a wireless cellular communication technology of 4G. LTE adopts an orthogonal frequency division multiplexing (Orthogonal Frequency Division Multiplexing, OFDM) technology, and time-frequency resources formed by subcarriers and OFDM symbols constitute radio physical time-frequency resources of the LTE system. At present, OFDM technology has been widely applied in the wireless communication. Due to the adoption of a cyclic prefix (Cyclic Prefix, CP), a CP-OFDM system may well solve the problem of multipath latency, and divides a frequency selective channel into a set of parallel flat channels, which well simplifies a channel estimation method and has high channel estimation accuracy. However, the performance of the CP-OFDM system is relatively sensitive to a frequency offset and a time offset between adjacent subbands, mainly because the spectrum leakage of the system is relatively large, which easily leads to inter-subband interference. Currently, the LTE system uses a guard interval in frequency domain, but this reduces spectral efficiency, so some new technologies need to be adopted to suppress out-of-band leakage.

Fifth generation new radio (Fifth Generation New Radio, 5G NR) communication technologies still adopt CP-OFDM as a basic waveform, and different subcarrier spacings may be adopted between two adjacent subbands, which will destroy orthogonality between subcarriers and bring new interference problems. To solve the interference problem, a relatively direct method is to insert a guard bandwidth between two transmission bands with different subcarrier spacings, but frequency resources are wasted.

With the development of technologies, the frequency bands used by future 6G services span a wide range, and the deployment manners also increase. Thus, not only multi-bandwidth channels are required, but also waveform schemes for different scenarios need to be satisfied. Each waveform scheme being implemented independently will increase the cost of base stations/terminals. How to design a unified waveform architecture to flexibly integrate a plurality of waveforms, how to flexibly support applications with different channel bandwidths, flexibly configure different subbands to adapt to different channel conditions, and improve spectral efficiency are problems to be solved.

In view of this, a data transmission method is provided by the embodiments of the present disclosure and includes: dividing to-be-transmitted data into N first sequences; where among the N first sequences, M first sequences each correspond to a single-carrier subband, and K first sequences each correspond to a multi-carrier subband, N is a positive integer, M is a positive integer less than N, and K is equal to N-M; within a time-domain symbol length, a number of data of a first sequence corresponding to a multi-carrier subband adjacent to a single-carrier subband is less than a number of data of a first sequence corresponding to the single-carrier subband; obtaining K second sequences based on the K first sequences; where the K second sequences include: a second sequence obtained by performing a zero-padding operation and a first inverse Fourier transform sequentially on a first sequence corresponding to the multi-carrier subband adjacent to the single-carrier subband, and a second sequence obtained by performing a first inverse Fourier transform on a first sequence corresponding to the multi-carrier subband not adjacent to the single-carrier subband; obtaining a time-domain data sequence based on the K second sequences and the M first sequences; and transmitting the time-domain data sequence on a transmission resource of the to-be-transmitted data.

In this way, by flexibly merging subbands of a plurality of data types together, the cost of separately performing each waveform scheme for a base station/terminal is reduced, and different subbands may be flexibly configured to adapt to different channel conditions, while supporting applications with different channel bandwidths. Within a time-domain symbol length, the number of data in the first sequence corresponding to the multi-carrier subband adjacent to the single-carrier subband is less than the number of data in the first sequence corresponding to the single carrier. Subband interference generated by the single-carrier subband may be avoided by performing the zero-padding operation on the first sequence corresponding to the multi-carrier subband adjacent to the single-carrier subband, which is beneficial to improving spectral efficiency

The data transmission method provided by the embodiments of the present disclosure may be applied to systems of a plurality of communication standards. For example, systems to which the data transmission method provided by the embodiments of the present disclosure may be applied include but are not limited to an LTE system, various versions evolved based on the LTE system, a 5G system, and other communication systems. Furthermore, the data transmission method provided by the embodiments of the present disclosure may also be applied to future-oriented communication systems (e.g., a 6G communication system) and the like.

A network architecture of a mobile communication network (including but not limited to 3G, 4G, 5G, and future mobile communication networks) in the embodiments of the present disclosure may include at least a first communication node and a second communication node. It should be understood that, in this example, the first communication node in a downlink may be a network side device (e.g., including but not limited to a base station), and the second communication node may be a terminal side device (e.g., including but not limited to a terminal). Of course, in an uplink, the first communication node may also be a terminal side device, and the second communication node may also be a network side device. In device-to-device communication between two communication nodes, the first communication node and the second communication node may both be base station side devices or terminal side devices. The first communication node and the second communication node may be referred to as a first node and a second node for short, respectively.

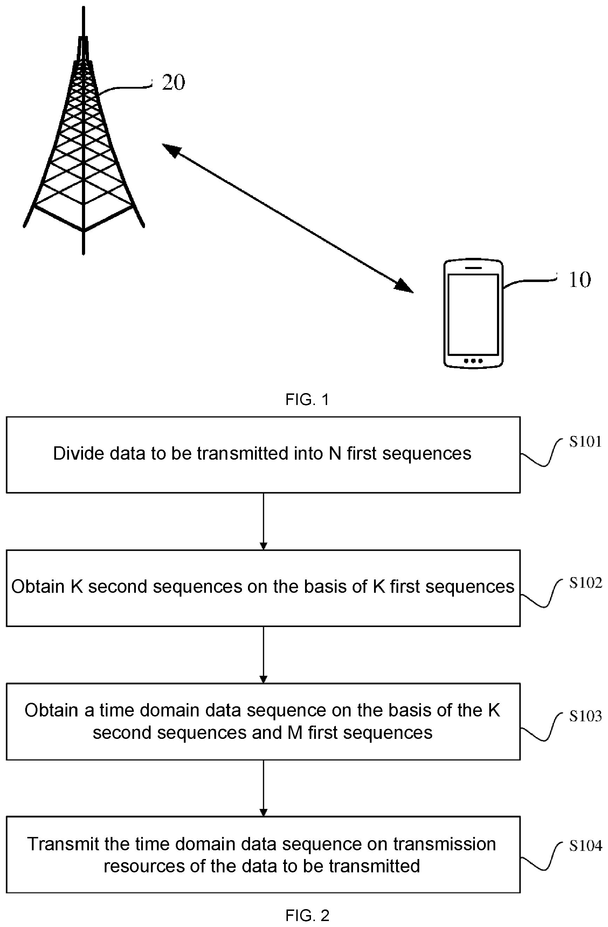

Exemplarily, taking an example in which the first communication node is a terminal and the second communication node is a base station, as shown in FIG. 1, FIG. 1 is a communication system provided by the embodiments of the present disclosure, and the communication system includes a terminal 10 and a base station 20. There may be one or more terminals 10 and one or more base stations 20, and the embodiments of the present disclosure do not limit the number.

In some embodiments, the base station 20 provides radio access services for the terminal 10. A base station 20 provides at least one service coverage area (also referred to as a cell). A terminal 10 entering the area may communicate with the base station 20 by a wireless signal, to receive a radio access service provided by the base station 20.

In some embodiments, a base station (BS) may be a base station or an evolutional base station (evolutional node B, eNB or eNodeB) in long term evolution (LTE), long term evolution advanced (LTEA), a base station device in a 5G network, or a base station in a future communication system, etc., and the base station may also include various network side devices such as various macro base stations, micro base stations, home base stations, remote radio devices, reconfigurable intelligent surfaces (RISs), routers, relays, TRPs, and wireless fidelity (WIFI) devices, etc.

In some embodiments, a terminal may be a device with a wireless transceiving function. The terminal may be a mobile phone, a Pad, a computer with a wireless transceiving function, a virtual reality (VR) terminal, an augmented reality (AR) terminal, a wireless terminal in industrial control, a wireless terminal in self driving, a wireless terminal in remote medical, a wireless terminal in a smart grid, a wireless terminal in transportation safety, a wireless terminal in a smart city, a wireless terminal in a smart home, etc. The embodiments of the present disclosure do not limit application scenarios. The terminal sometimes may also be referred to as a user, a user equipment (UE), an access terminal, a UE unit, a UE station, a mobile station, a mobile platform, a remote station, a remote terminal, a mobile device, a UE terminal, a wireless communication device, a UE agent, or a UE apparatus, etc., which is not limited to the embodiments of the present disclosure.

It should be noted that, FIG. 1 is only an exemplary framework diagram, and a number of devices and names of the various devices included in FIG. 1 are not limited, and in addition to the devices shown in FIG. 1, the communication system may also include other devices (e.g., a core network device).

The embodiments of the present disclosure do not limit the application scenarios. The system architectures and the service scenarios described in the embodiments of the present disclosure are provided for more clearly explaining the technical solutions of the embodiments of the present disclosure, and do not constitute a limitation on the technical solutions provided in the embodiments of the present disclosure, and the ordinary skilled in the art may know that with the evolution of the network architectures and the emergence of new service scenarios, the technical solutions provided in the embodiments of the present disclosure are also applicable to similar technical problems.

The embodiments of the present disclosure provide a data transmission method, as shown in FIG. 2, the method includes S101 to S104.

In S101, to-be-transmitted data is divided into N first sequences.

Among the N first sequences, M first sequences each correspond to a single-carrier subband, and K first sequences each correspond to a multi-carrier subband. N is a positive integer, M is a positive integer less than N, and K is equal to N-M.

The K first sequences at least include a first sequence corresponding to a multi-carrier subband adjacent to a single-carrier subband and a first sequence corresponding to a multi-carrier subband not adjacent to a single-carrier subband. For ease of description, a multi-carrier subband adjacent to a single-carrier subband is hereinafter referred to as a first multi-carrier subband, and a multi-carrier subband not adjacent to a single-carrier subband is hereinafter referred to as a second multi-carrier subband.

Within a time-domain symbol length, a number of data of the first sequence corresponding to the first multi-carrier subband is less than a number of data of the first sequence corresponding to the single-carrier subband.

When a first sequence is transmitted by a single carrier, less power and energy are required, which may effectively reduce power consumption and energy consumption of a sending end and a receiving end. When a first sequence is transmitted in a multi-carrier mode, the first sequence may be transmitted on a plurality of different carriers, thereby reducing the risk of a single carrier failure and improving reliability and fault tolerance of the system.

In some embodiments, each first sequence among the N first sequences is allocated a different subband, and a total of N subbands are allocated, i.e., the N first sequences correspond to N subbands. The N subbands are all or a part of subbands included in a channel bandwidth.

In some embodiments, K first sequences correspond to K subbands. The K subbands are all or a part of subbands included in the channel bandwidth.

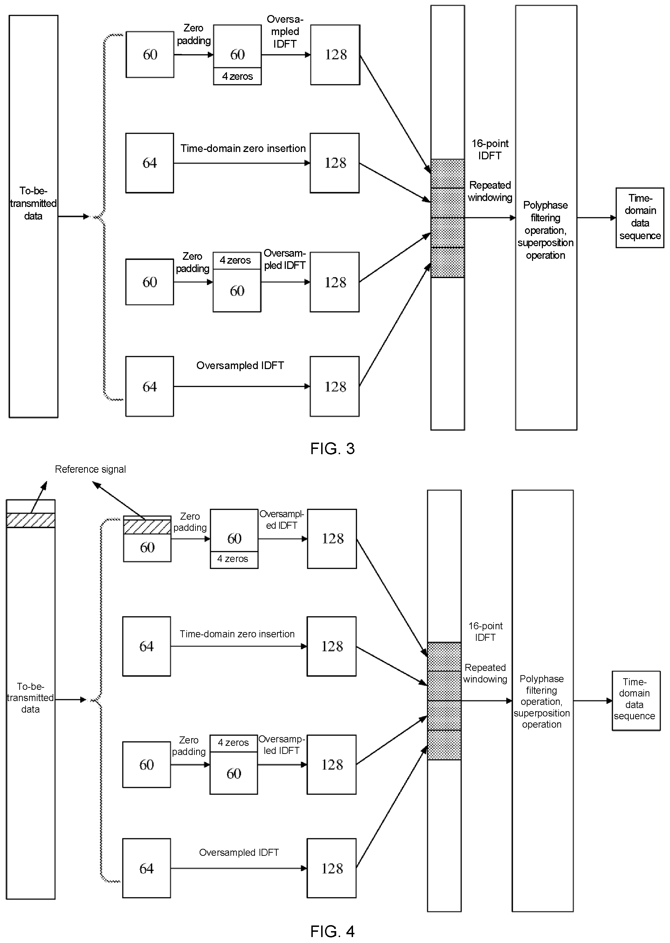

Exemplarily, as shown in FIG. 3, the to-be-transmitted data is divided into four first sequences. A first first sequence contains 60 data, a second first sequence contains 64 data, a third first sequence contains 60 data, and a fourth first sequence contains 64 data. The second first sequence corresponds to a single-carrier subband, and the remaining three sequences each correspond to a multi-carrier subband. The first first sequence corresponds to multi-carrier subband 1, the second first sequence corresponds to single-carrier subband 2, the third first sequence corresponds to multi-carrier subband 3, and the fourth first sequence corresponds to multi-carrier subband 4.

In some embodiments, in frequency domain, the N subbands satisfy at least one of:
the N subbands being arbitrarily distributed in the frequency domain;
the N subbands being continuous in the frequency domain;
bandwidths of the N subbands being the same; or
M single-carrier subbands among the N subbands being non-continuous in the frequency domain.

In some embodiments, the to-be-transmitted data is all or a part of to-be-transmitted data in the channel bandwidth.

In some embodiments, the to-be-transmitted data includes modulated data and/or reference signal data.

The modulated data may be constellation point-modulated data, and the constellation point-modulated data is used for transmitting user data. The reference signal data is used to help the receiving end measure a channel state, perform channel estimation, and perform decoding. By using the reference signal data, the receiving end may more accurately demodulate and decode a signal, thereby improving the reliability and performance of communication.

In some embodiments, in a case where the to-be-transmitted data includes reference signal data, N first sequences carry the reference signal data.

Exemplarily, as shown in FIG. 4, in a case where the to-be-transmitted data includes reference signal data, the first first sequence carries the reference signal data.

In some embodiments, subbands corresponding to N groups of first sequences are all single-carrier subbands. In this case, the above M is equal to N.

In some embodiments, within a time-domain symbol length, the number of data of the first sequence corresponding to the first multi-carrier subband is less than the number of data of the first sequence corresponding to the second multi-carrier subband.

Exemplarily, continuing to refer to FIG. 3, within a time-domain symbol length, a multi-carrier subband adjacent to a single-carrier subband include multi-carrier subband 1 and multi-carrier subband 3, and a multi-carrier subband not adjacent to a single-carrier subband include multi-carrier subband 4. A number of data of the first sequence corresponding to the multi-carrier subband 1 and a number of data of the first sequence corresponding to the multi-carrier subband 3 are both less than a number of data of the first sequence corresponding to the multi-carrier subband 4.

In some embodiments, within a time-domain symbol length, the number of data of the first sequence corresponding to the second multi-carrier subband is equal to the number of data of the first sequence corresponding to the single-carrier subband.

Exemplarily, continuing to refer to FIG. 3, within a time-domain symbol length, the number of data of the first sequence corresponding to the multi-carrier subband 4 is equal to the number of data of the first sequence corresponding to the single-carrier subband 2.

In some embodiments, within a time-domain symbol length, the number of data of the first sequence corresponding to the first multi-carrier subband is less than a number of subcarriers of the first multi-carrier subband.

Exemplarily, continuing to refer to FIG. 3, within a time-domain symbol length, the number of data of the first sequence corresponding to the multi-carrier subband 1 and the number of data of the first sequence corresponding to the multi-carrier subband 3 are both less than the number of data of the first sequence corresponding to the single-carrier subband 2.

In some embodiments, within a time-domain symbol length, the number of data of the first sequence corresponding to the second multi-carrier subband is equal to the number of subcarriers of the second multi-carrier subband.

Exemplarily, continuing to refer to FIG. 3, within a time-domain symbol length, the number of data of the first sequence corresponding to the multi-carrier subband 4 is 64, and a number of subcarriers of the multi-carrier subband 4 is 64, so the number of data of the first sequence corresponding to the multi-carrier subband 4 is equal to the number of subcarriers of the multi-carrier subband 4.

In some embodiments, within a time-domain symbol length, the number of data of the first sequence corresponding to the single-carrier subband is equal to the number of subcarriers of the multi-carrier subband.

Exemplarily, continuing to refer to FIG. 3, within a time-domain symbol length, the number of data of the first sequence corresponding to the single-carrier subband 2 is 64, and the number of subcarriers in the multi-carrier subband is also 64, so within the time-domain symbol length, the number of data of the first sequence corresponding to the single-carrier subband is equal to the number of subcarriers in the multi-carrier subband.

In some embodiments, within a time-domain symbol length, the number of data of the first sequence corresponding to the single-carrier subband is 2 to the power of i, where i is an integer greater than or equal to 0.

Exemplarily, continuing to refer to FIG. 3, within a time-domain symbol length, the number of data of the first sequence corresponding to the single-carrier subband 2 is 64, which satisfies 2 to the power of 6.

In some embodiments, within a time-domain symbol length, the number of data of the first sequence corresponding to the second multi-carrier subband is 2 to the power of j, where j is an integer greater than or equal to 0.

Exemplarily, continuing to refer to FIG. 3, within a time-domain symbol length, the number of data of the first sequence corresponding to the multi-carrier subband 4 is 64, which satisfies 2 to the power of 6.

In some embodiments, within a same time length, numbers of data of the M first sequences are the same.

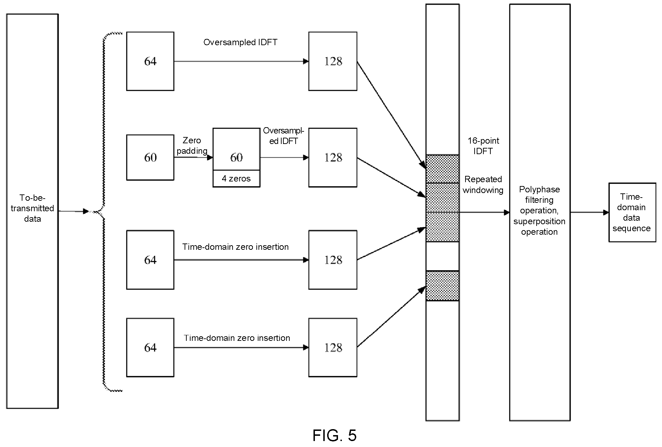

Exemplarily, as shown in FIG. 5, the to-be-transmitted data is divided into four first sequences. A first first sequence contains 64 data, a second first sequence contains 60 data, a third first sequence contains 64 data, and a fourth first sequence contains 64 data. The first first sequence corresponds to multi-carrier subband 1, the second first sequence corresponds to multi-carrier subband 2, the third first sequence corresponds to single-carrier subband 3, and the fourth first sequence corresponds to single-carrier subband 4. Numbers of data of the first sequences corresponding to the single-carrier subband 3 and the single-carrier subband 4 are the same.

The above one time-domain symbol length may be one OFDM symbol time length.

In some embodiments, both sides of a multi-carrier subband are adjacent to two single-carrier subbands, and the multi-carrier subband is used for transmitting data or is not used for transmitting data.

Exemplarily, continuing to refer to FIG. 5, a multi-carrier subband between the single-carrier subband 3 and the single-carrier subband 4 does not transmit data.

In some embodiments, there is no limitation is on the configuration of the K multi-carrier subbands corresponding to the K first sequences. For example, subcarrier spacings of the K multi-carrier subbands may be the same or may be different. For another example, numbers of subcarriers of the K multi-carrier subbands may be the same or may be different.

In some embodiments, a subband is a single-carrier subband, and a center frequency point of the subband is located at a center of the single-carrier subband.

In some embodiments, data in the first sequence corresponding to the first multi-carrier subband is mapped onto subcarriers within the first multi-carrier subband that are not adjacent to the single-carrier subband, and data mapped onto subcarriers within the first multi-carrier subband that are adjacent to the single-carrier subband is 0.

Thus, at the boundary between a single-carrier subband and a multi-carrier subband, since the single carrier generates subband interference, data mapped on subcarriers adjacent to the single-carrier subband is set to 0 to avoid the interference, while utilizing other subcarriers without interference, thereby improving spectral efficiency.

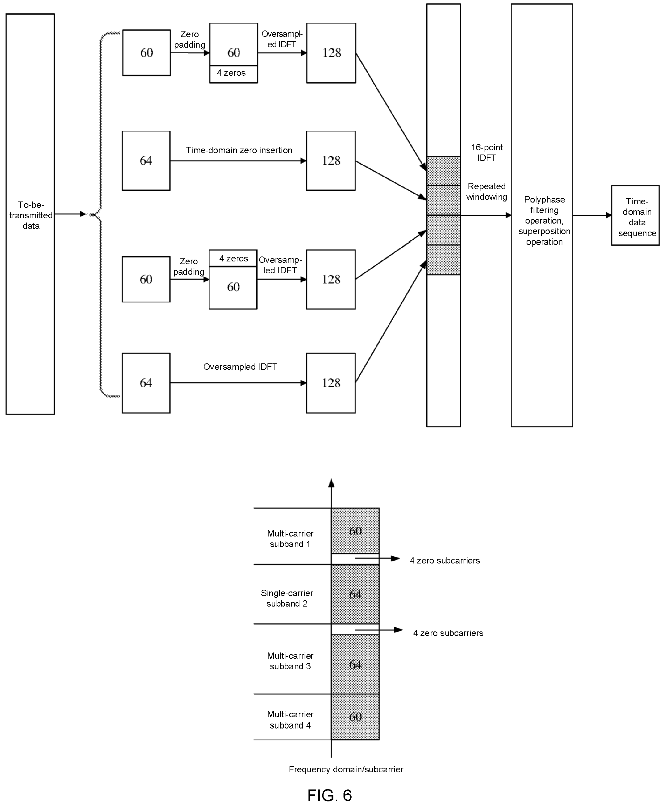

Exemplarily, as shown in FIG. 6, the to-be-transmitted data is divided into 4 first sequences, where a first first sequence contains 60 data, a second first sequence contains 64 data, a third first sequence contains 60 data, and a fourth first sequence contains 64 data. The first first sequence corresponds to multi-carrier subband 1, the second first sequence corresponds to single-carrier subband 2, the third first sequence corresponds to multi-carrier subband 3, and the fourth first sequence corresponds to multi-carrier subband 4. Data in first sequences corresponding to the multi-carrier subband 1 and the multi-carrier subband 3 are respectively mapped onto subcarriers within the multi-carrier subband 1 and the multi-carrier subband 3 that are not adjacent to the single-carrier subband 2. Moreover, data mapped on the 4 subcarriers within the multi-carrier subband 1 adjacent to the single-carrier subband 2 is 0, and data mapped on the 4 subcarriers within the multi-carrier subband 3 adjacent to the single-carrier subband 2 is 0.

In S102, K second sequences are obtained based on the K first sequences.

The K second sequences include: a second sequence obtained by sequentially performing a zero-padding operation and a first inverse Fourier transform on the first sequence corresponding to the first multi-carrier subband, and a second sequence obtained by performing a first inverse Fourier transform on the first sequence corresponding to the second multi-carrier subband.

In some embodiments, performing the zero-padding operation on the first sequence corresponding to the first multi-carrier subband includes: in a case where only one side of the first multi-carrier subband is adjacent to a single-carrier subband, performing the zero-padding operation on the side of the first sequence corresponding to the first multi-carrier subband that is adjacent to the single-carrier subband; or, in a case where both sides of the first multi-carrier subband are respectively adjacent to the single-carrier subband, performing the zero-padding operation on both sides of the first sequence corresponding to the first multi-carrier subband. Thus, at the boundary between the single-carrier subband and the multi-carrier subband, since the single carrier generates subband interference, interference is avoided by performing zero-padding on the multi-carrier subband, while other subcarriers without interference are utilized, and spectral efficiency is improved.

In some embodiments, the number of zero-padding in the zero-padding operation satisfies a positive correlation with a roll-off factor of a filter of the single-carrier subband adjacent to the first multi-carrier subband. Thus, zero-padding is performed on the data in the adjacent subband affected by the roll-off part of the filter, thereby avoiding inter-subband interference.

Exemplarily, continuing to refer to FIG. 3, the multi-carrier subband 1 corresponding to the first first sequence and the multi-carrier subband 3 corresponding to the third first sequence are adjacent to the single-carrier subband 2 corresponding to the second first sequence, and a roll-off factor of a filter of single-carrier subband 2 is 1/8; 4 zero subcarriers are added to the side of the first sequence corresponding to the multi-carrier subband 1 that is adjacent to the single-carrier subband 2, to obtain a second sequence corresponding to the multi-carrier subband 1, where the number of data is 64; 4 zero subcarriers are added to the side of the first sequence corresponding to the multi-carrier subband 3 that is adjacent to the single-carrier subband 2,, to obtain a second sequence corresponding to the multi-carrier subband 3, where the number of data is 64.

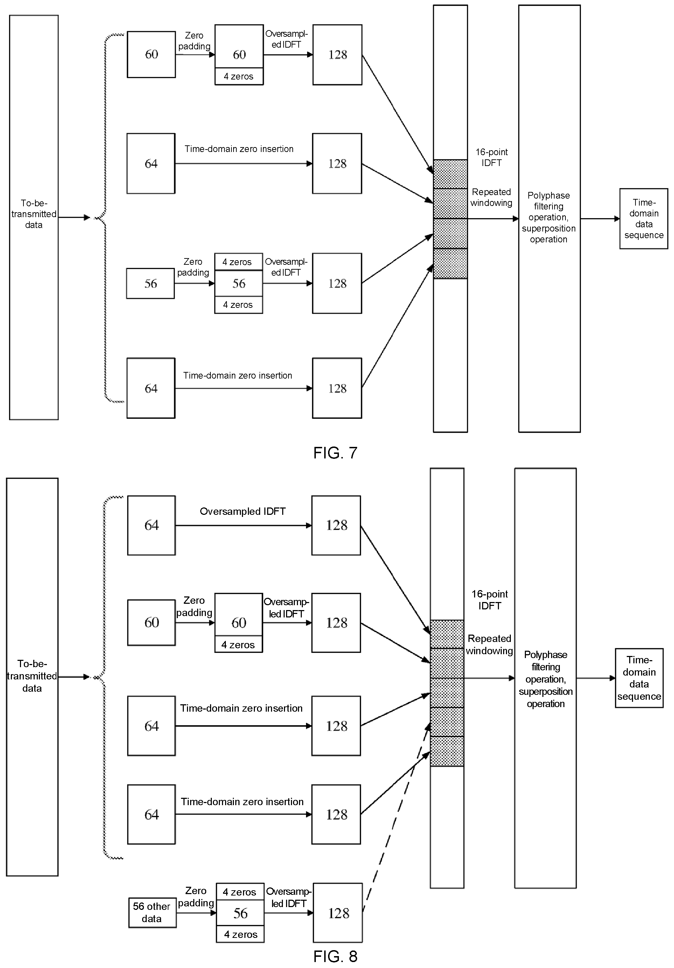

In yet another example, as shown in FIG. 7, the to-be-transmitted data is divided into 4 first sequences, where a first first sequence contains 60 data, a second first sequence contains 64 data, a third first sequence contains 56 data, and a fourth first sequence contains 64 data. The first first sequence corresponds to multi-carrier subband 1, the second first sequence corresponds to single-carrier subband 2, the third first sequence corresponds to multi-carrier subband 3, and the fourth first sequence corresponds to single-carrier subband 4. A bandwidth of a filter is a width of the multi-carrier subband 1, and the roll-off factor is 1/8.

The first sequence corresponding to the multi-carrier subband 1 is adjacent to a side of the single-carrier subband 2; 4 zero subcarriers are added to the side of the first sequence corresponding to the multi-carrier subband 1 that is adjacent to the single-carrier subband 2, to obtain a second sequence corresponding to the multi-carrier subband 1.

The first sequence corresponding to the multi-carrier subband 3 is adjacent to a side of the single-carrier subband 2 and is adjacent to a side of the single-carrier subband 4; 4 zero subcarriers are added to the side of the first sequence corresponding to the multi-carrier subband 3 that is adjacent to the single-carrier subband 2, and 4 zero subcarriers are added to the other side of the first sequence corresponding to the multi-carrier subband 3 that is adjacent to the single-carrier subband 4, to obtain the second sequence corresponding to the multi-carrier subband 3.

In some embodiments, the first inverse Fourier transform is a transform performed on data within a time-domain symbol of the first sequence.

In some embodiments, the first inverse Fourier transform is an oversampled inverse Fourier transform. The inverse Fourier transform includes at least an inverse discrete Fourier transform (IDFT).

In some embodiments, a number of transform points of the first inverse Fourier transform satisfies 2 to the power of i, where i is an integer greater than or equal to 0.

In some embodiments, in a case where subcarrier spacings of two subbands are the same, first inverse Fourier transforms performed on first sequences corresponding to the two subbands adopt a same number of transform points.

In some embodiments, a zero-frequency position of the first inverse Fourier transform performed on the first sequence is located within a subband corresponding to the first sequence, or a zero-frequency position of the first inverse Fourier transform performed on the first sequence is located on a subcarrier within the subband corresponding to the first sequence.

In S103, a time-domain data sequence is obtained based on the K second sequences and the M first sequences.

In some embodiments, the M first sequences are processed, to obtain M third sequences, where a length of the third sequence is twice a length of the first sequence corresponding to the single carrier; a second inverse Fourier transform is performed on the K second sequences and the M third sequences, to obtain a time-domain data sequence.

In some embodiments, processing the M first sequences to obtain the M third sequences includes: performing a zero-insertion operation between two adjacent data in the first sequence, and performing a zero-insertion operation after last data in the first sequence, to obtain the third sequence.

Exemplarily, with reference to FIG. 3, a zero-insertion operation is performed between two adjacent data in the first sequence corresponding to the single-carrier subband 2, and a zero-insertion operation is performed after the last data in the first sequence, to obtain the third sequence. The third sequence contains 128 data.

In some embodiments, processing the M first sequences to obtain the M third sequences includes: performing cyclic repetition of partial data on the first sequence, to obtain a fourth sequence, where a length of the fourth sequence is twice a length of the first sequence corresponding to the single carrier; and performing an inverse Fourier transform on the fourth sequence, to obtain the third sequence.

In some embodiments, processing the M first sequences to obtain the M third sequences includes: performing cyclic repetition of partial data on the first sequence, to obtain a fourth sequence, where a length of the fourth sequence is less than twice a length of the first sequence corresponding to the single carrier; and performing an oversampled inverse Fourier transform on the fourth sequence, to obtain the third sequence.

In some embodiments, a number of transform points of the second inverse Fourier transform is greater than N. The inverse Fourier transform includes an inverse discrete Fourier transform (IDFT).

In some embodiments, performing the second inverse Fourier transform on the K second sequences and the M third sequences to obtain the time-domain data sequence includes: acquiring P sixth sequences, where P is a positive integer; and performing the second inverse Fourier transform on the K second sequences, the M third sequences, and the P sixth sequences together, to obtain the time-domain data sequence.

In some embodiments, data contained in the P sixth sequences is other data other than the to-be-transmitted data.

In some embodiments, performing the second inverse Fourier transform on the K second sequences and the M third sequences to obtain the time-domain data sequence includes: acquiring P sixth sequences, where P is a positive integer; performing a zero-padding operation and/or an inverse Fourier transform operation on the P sixth sequences respectively, to obtain P eighth sequences, where a number of data contained in the eighth sequence is twice the number of data contained in the first sequence corresponding to the single-carrier subband; and performing the second inverse Fourier transform on the K second sequences, the M third sequences, and the P eighth sequences together, to obtain the time-domain data sequence.

In some embodiments, performing the second inverse Fourier transform on the K second sequences and the M third sequences to obtain the time-domain data sequence includes: arranging the K second sequences and the M third sequences in rows, to obtain a data matrix; extracting a plurality of seventh sequences from the data matrix by columns, where each seventh sequence among the plurality of seventh sequences contains N data; performing the second inverse Fourier transform on the plurality of seventh sequences respectively, to obtain a plurality of time-domain data subsequences; and constituting the time-domain data sequence with the plurality of time-domain data subsequences.

In some embodiments, the time-domain data sequence is constituted by concatenating the plurality of time-domain data subsequences.

In some embodiments, a concatenation interval between two time-domain data subsequences is half a length of time-domain data subsequences.

In some embodiments, obtaining the time-domain data sequence based on the K second sequences and the M first sequences includes: in a case where subcarrier spacings corresponding to the K second sequences (or the number of data corresponding to the K second sequences) are different, processing the K second sequences, to obtain K ninth sequences; and obtaining the time-domain data sequence based on the K ninth sequences and the M first sequences.

In some embodiments, processing the K second sequences to obtain K ninth sequences includes: for each second sequence among the R second sequences corresponding to a non-minimum subcarrier spacing subband among the K second sequences, selecting several groups of second sequence data to be concatenated with the second sequence to form a sequence with a length equal to a reference length, thereby obtaining a new second sequence; and composing the new R second sequences and the second sequences corresponding to the minimum subcarrier spacing subband among the K second sequences into K ninth sequences.

In some embodiments, obtaining the time-domain data sequence based on the K second sequences and the M first sequences further includes other operations. For example, a cyclic prefix operation is added.

In S104, the time-domain data sequence is transmitted on a transmission resource of the to-be-transmitted data.

In some embodiments, N subbands included in the transmission resource of the to-be-transmitted data are all or a part of the subbands included in the channel bandwidth, and the N subbands are subbands corresponding to the N first sequences.

In some embodiments, before transmitting one time-domain data sequence on the transmission resource of the to-be-transmitted data, a filtering operation and/or a windowing operation is performed on the time-domain data sequence, and the filtering operation is single-phase filtering or polyphase filtering.

In some embodiments, the filtering operation satisfies at least one of: a coefficient of a filter corresponding to the filtering operation being a preset value; or a width of the filter corresponding to the filtering operation being equal to a bandwidth of a subband corresponding to the filtering operation.

In some embodiments, parameters of filters corresponding to different subbands among the N subbands are the same.

Exemplarily, a coefficient of a filter corresponding to the filtering operation is 1 within a subband.

In some embodiments, the windowing operation includes: grouping the time-domain data sequence, performing periodic extension, then performing element-wise multiplication with a preset function, and finally performing a staggered superposition between respective groups.

In some embodiments, a filtering function used in the polyphase filtering includes at least one of: a root raised cosine function, a raised cosine function, a rectangular function, or an isotropic orthogonal transform algorithm (IOTA) function.

In some embodiments, a DAC and/or an RF is further performed on the time-domain data sequence obtained after performing the filtering operation and/or the windowing operation. DAC (digital to analog converter) is a conversion from a digital signal to an analog signal. In the time-domain, the DAC involves converting digital data into a continuous analog waveform. For example, you may have a digital data sequence representing music or speech; through the DAC, these data are converted into an analog signal, which may then be played or transmitted. RF (radio frequency) refers to radio frequency signal processing. In wireless communication, information is modulated onto a high frequency radio wave and then transmitted.

Exemplarily, as shown in FIG. 8, the to-be-transmitted data is divided into four first sequences, each first sequence among the four first sequences corresponds to a subband, and the four first sequences respectively contain 64 data, 60 data, 64 data, and 64 data. The first first sequence corresponds to multi-carrier subband 1, the second first sequence corresponds to multi-carrier subband 2, the third first sequence corresponds to single-carrier subband 3, and the fourth first sequence corresponds to single-carrier subband 4. A second sequence corresponding to the multi-carrier subband 2 is obtained by performing an oversampled IDFT after adding 4 zero subcarriers at a back end of the first sequence corresponding to the multi-carrier subband 2, where the second sequence contains 128 data; a third sequence corresponding to the single-carrier subband 3 is obtained by performing a zero-insertion operation between two adjacent data in the first sequence corresponding to the single-carrier subband 3 and performing a zero-insertion operation after the last data in the first sequence, where the third sequence contains 128 data; and a third sequence corresponding to the single-carrier subband 4 is obtained by performing a zero-insertion operation between two adjacent data in the first sequence corresponding to the single-carrier subband 4 and performing a zero-insertion operation after the last data in the first sequence, where the third sequence contains 128 data.

A sixth sequence containing 56 other data is acquired, and an oversampled IDFT is further performed after performing a zero-padding operation on both ends of the sixth sequence, to obtain a sixth sequence containing 128 data, and a 16-point IDFT, repeated windowing, a polyphase filtering operation, and a superposition operation are performed on the sixth sequence together with the above two second sequences and two third sequences, to form a time-domain data sequence, where a bandwidth of a filter is the bandwidth of the multi-carrier subband 1 and a roll-off factor is 1/8.

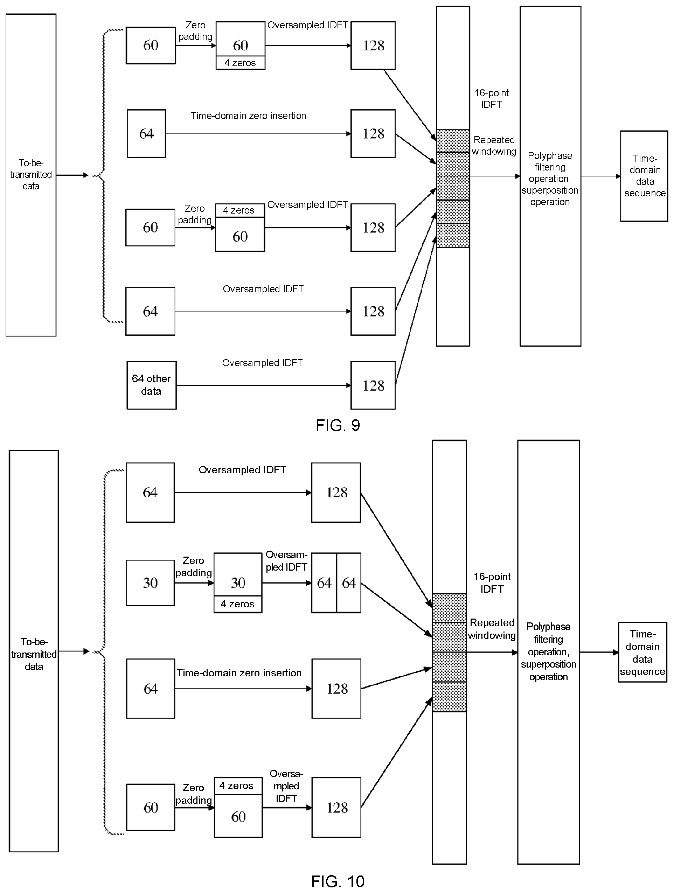

In yet another example, as shown in FIG. 9, the to-be-transmitted data is divided into four first sequences, each first sequence among the four first sequences corresponds to a subband, and the four first sequences respectively contain 60 data, 64 data, 60 data, and 64 data. The first first sequence corresponds to multi-carrier subband 1, the second first sequence corresponds to single-carrier subband 2, the third first sequence corresponds to multi-carrier subband 3, and the fourth first sequence corresponds to multi-carrier subband 4. A second sequence corresponding to the multi-carrier subband 1 is obtained by performing a sampled IDFT after adding 4 zero subcarriers at a back end of the first sequence corresponding to the multi-carrier subband 1, where the second sequence contains 128 data; a third sequence corresponding to the single-carrier subband 2 is obtained by performing a zero-insertion operation between two adjacent data in the first sequence corresponding to the single-carrier subband 2 and performing a zero-insertion operation after the last data in the first sequence; a second sequence corresponding to the multi-carrier subband 3 is obtained by performing an oversampled IDFT after adding 4 zero subcarriers at a front end of the first sequence corresponding to the multi-carrier subband 3, where the second sequence contains 128 data; and a second sequence corresponding to the multi-carrier subband 4 is obtained by performing an oversampled IDFT on the first sequence corresponding to the multi-carrier subband 4.

A sixth sequence containing 64 other data is acquired, and an oversampled IDFT is performed on the sixth sequence, to obtain a sixth sequence containing 128 data, and a 16-point IDFT, repeated windowing, a polyphase filtering operation, and a superposition operation are performed on the sixth sequence together with the above three second sequences and a third sequence, to form a time-domain data sequence, where a bandwidth of a filter is the bandwidth of the multi-carrier subband 1 and a roll-off factor is 1/8.

In yet another example, as shown in FIG. 10, the to-be-transmitted data is divided into four first sequences, each first sequence among the four first sequences corresponds to a subband, and the four first sequences respectively contain 64 data, 30 data, 64 data, and 60 data. The first first sequence corresponds to multi-carrier subband 1, the second first sequence corresponds to multi-carrier subband 2, the third first sequence corresponds to single-carrier subband 3, and the fourth first sequence corresponds to multi-carrier subband 4. A second sequence corresponding to the multi-carrier subband 1 is obtained by performing an oversampled IDFT on the first sequence corresponding to multi-carrier subband 1, where the second sequence contains 128 data; a second sequence corresponding to the multi-carrier subband 2 containing 32 data, is obtained by adding 2 zero subcarriers at a back end of the first sequence corresponding to the multi-carrier subband 2, a third sequence corresponding to the multi-carrier subband 2 containing 64 data, is obtained by performing an oversampled IDFT on the second sequence corresponding to the multi-carrier subband 2, and the third sequence corresponding to the multi-carrier subband 2 and a third sequence corresponding to the multi-carrier subband 2 at a next time instant are concatenated, to form a new third sequence corresponding to the multi-carrier subband 2 containing 128 data; a third sequence corresponding to the single-carrier subband 3 is obtained by performing a zero-insertion operation between two adjacent data in the first sequence corresponding to the single-carrier subband 3 and performing a zero-insertion operation after the last data in the first sequence, where the third sequence contains 128 data; and a second sequence corresponding to the multi-carrier subband 4 is obtained by performing an oversampled IDFT after adding 4 zero subcarriers at a front end of the first sequence corresponding to the multi-carrier subband 4, where the second sequence contains 128 data.

16-point IDFT, repeated windowing, polyphase filtering operations, and superposition operations are performed on the second sequence corresponding to multi-carrier subband 1, the new third sequence corresponding to multi-carrier subband 2, the third sequence corresponding to single-carrier subband 3, and the second sequence corresponding to multi-carrier subband 4, to form a time-domain data sequence, where a bandwidth of a filter is the bandwidth of the multi-carrier subband 1 and a roll-off factor is 1/8.

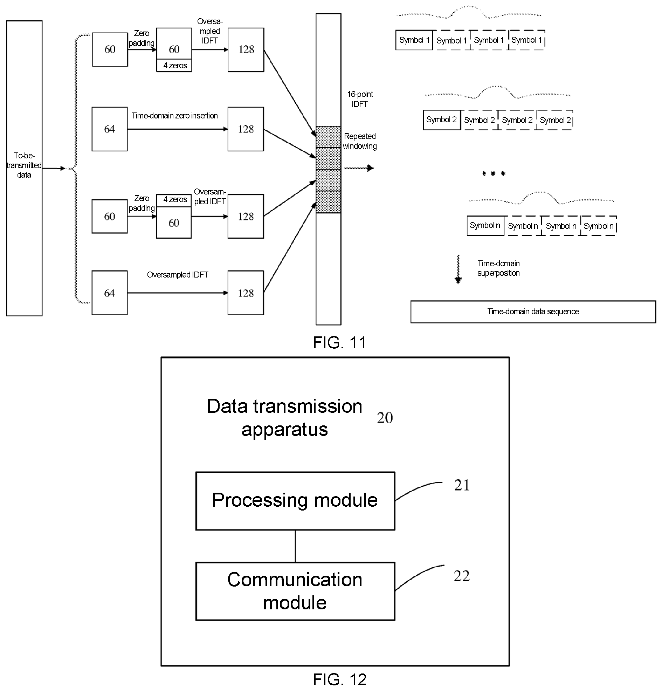

In yet another example, as shown in FIG. 11, the to-be-transmitted data is divided into four first sequences, each first sequence among the four first sequences corresponds to a subband, and the four first sequences respectively contain 60 data, 64 data, 60 data, and 64 data. The first first sequence corresponds to multi-carrier subband 1, the second first sequence corresponds to single-carrier subband 2, the third first sequence corresponds to multi-carrier subband 3, and the fourth first sequence corresponds to multi-carrier subband 4. A second sequence corresponding to the multi-carrier subband 1 is obtained by performing a sampled IDFT after adding 4 zero subcarriers at a back end of the first sequence corresponding to the multi-carrier subband 1, where the second sequence contains 128 data; a third sequence corresponding to the single-carrier subband 2 is obtained by performing a zero-insertion operation between two adjacent data in the first sequence corresponding to the single-carrier subband 2 and performing a zero-insertion operation after the last data in the first sequence; a second sequence corresponding to the multi-carrier subband 3 is obtained by performing an oversampled IDFT after adding 4 zero subcarriers at a front end of the first sequence corresponding to the multi-carrier subband 3, where the second sequence contains 128 data; and a second sequence corresponding to the multi-carrier subband 4 is obtained by performing an oversampled IDFT on the first sequence corresponding to the multi-carrier subband 4.

The second sequence corresponding to the multi-carrier subband 1, the third sequence corresponding to the single-carrier subband 2, the second sequence corresponding to the multi-carrier subband 3, and the second sequence corresponding to the multi-carrier subband 4 are arranged in rows, to obtain a data matrix; a plurality of seventh sequences are extracted by columns from the data matrix, where each seventh sequence among the plurality of seventh sequences contains 4 data; a 16-point IDFT, repeated windowing and then a polyphase filtering operation are performed on the plurality of seventh sequences, respectively, to obtain a plurality of time-domain data subsequences; time-domain superposition is performed on the plurality of time-domain data subsequences, to obtain a time-domain data sequence, that is, the plurality of time-domain data subsequences are concatenated, to form the time-domain data sequence, and a concatenation interval between two time-domain data subsequences is half of the length of the time-domain data subsequence.

Based on this, by flexibly merging subbands of a plurality of data types together, the cost of separately performing each waveform scheme for a base station/terminal is reduced, and different subbands may be flexibly configured to adapt to different channel conditions, while supporting applications of different channel bandwidths. Within a time-domain symbol length, the number of data in the first sequence corresponding to the multi-carrier subband adjacent to the single-carrier subband is less than the number of data in the first sequence corresponding to the single carrier. Subband interference generated by the single-carrier subband may be avoided by performing a zero-padding operation on the first sequence corresponding to the multi-carrier subband adjacent to the single-carrier subband, which is beneficial to improving spectral efficiency.

In some embodiments, data is transmitted on a channel bandwidth; the channel bandwidth contains W subbands, where among the W subbands, M subbands are single-carrier subbands, K subbands are multi-carrier subbands, M is less than or equal to N, N is less than or equal to W, K is equal to N-M, and N, W, and M are all positive integers; within a time-domain symbol length, a number of data in a first sequence corresponding to a multi-carrier subband adjacent to a single-carrier subband is less than a number of subcarriers of the multi-carrier subband; a number of data in a first sequence corresponding to a multi-carrier subband not adjacent to a single-carrier subband is equal to a number of subcarriers of the multi-carrier subband; and a number of data in a first sequence corresponding to a single-carrier subband is equal to a number of subcarriers of the multi-carrier subband.

The above introduces the solutions of the embodiments of the present disclosure mainly from the perspective of methods. A data transmission apparatus is also shown below, which is used to perform the data transmission communication method in any of the above embodiments and possible implementations thereof. It can be understood that the data transmission apparatus includes the corresponding hardware structures and/or software modules for performing various functions in order to implement the data transmission method, and those skilled in the art should easily recognize that the present disclosure can be implemented in the form of hardware or a combination of hardware and computer software, in conjunction with the algorithm steps of various examples described in the embodiments of the present disclosure. Whether a certain function is performed by hardware or by computer software driving hardware, depends on a specific application and a design constraint condition of the technical solution. Professional technicians may use different methods to implement the described functions for each specific application, but such implementation should not be considered beyond the scope of the present disclosure.

In the embodiments of the present disclosure, the data transmission apparatus may be divided into functional modules according to the above method embodiments, and for example, each functional module may be divided corresponding to each function, or two or more functions may also be integrated into one functional module. The above integrated module is implemented in the form of hardware or in the form of software. It should be noted that, the division of the modules in the embodiments of the present disclosure is schematic, which is only a logical functional division, and there may be other divisions in actual implementations. The example in which each functional module is divided corresponding to each function, is taken for explanation below.

FIG. 12 is a data transmission apparatus provided by the embodiments of the present disclosure. The data transmission apparatus 20 includes: a processing module 21 and a communication module 22;
the processing module 21, configured to divide to-be-transmitted data into N first sequences; where, among the N first sequences, M first sequences each correspond to a single-carrier subband, K first sequences each correspond to a multi-carrier subband, N is a positive integer, M is a positive integer less than N, and K is equal to N-M; within a time-domain symbol length, a number of data of a first sequence corresponding to a multi-carrier subband adjacent to a single-carrier subband is less than a number of data of a first sequence corresponding to the single-carrier subband;
the processing module 21, further configured to obtain K second sequences based on the K first sequences; where the K second sequences include: a second sequence obtained by sequentially performing a zero-padding operation and a first inverse Fourier transform on the first sequence corresponding to a multi-carrier subband adjacent to the single-carrier subband, and a second sequence obtained by performing a first inverse Fourier transform on the first sequence corresponding to a multi-carrier subband non-adjacent to the single-carrier subband;
the processing module 21, further configured to obtain a time-domain data sequence based on the K second sequences and the M first sequences; and
the communication module 22, configured to transmit the time-domain data sequence on a transmission resource of the to-be-transmitted data.

In some embodiments, N subbands included in the transmission resource of the to-be-transmitted data are all or a part of the subbands included in a channel bandwidth, and the N subbands are subbands corresponding to the N first sequences.

In some embodiments, in frequency domain, the N subbands satisfy at least one of:
the N subbands being arbitrarily distributed in frequency domain;
the N subbands being continuous in frequency domain;
bandwidths of the N subbands being the same; or
M single-carrier subbands among the N subbands being non-continuous in frequency domain.

In some embodiments, both sides of the multi-carrier subband are adjacent to two single-carrier subbands, and the multi-carrier subband is used for transmitting data, or is not used for transmitting data.

In some embodiments, within a time-domain symbol length, the number of data of the first sequence corresponding to the multi-carrier subband adjacent to the single-carrier subband is less than a number of data of the first sequence corresponding to the multi-carrier subband non-adjacent to the single-carrier subband, and the number of data of the first sequence corresponding to the multi-carrier subband non-adjacent to the single-carrier subband is equal to the number of data of the first sequence corresponding to the single-carrier subband.

In some embodiments, within a time-domain symbol length, the number of data of the first sequence corresponding to the multi-carrier subband adjacent to the single-carrier subband is less than a number of subcarriers of the multi-carrier subband adjacent to the single-carrier subband, a number of data of the first sequence corresponding to the multi-carrier subband non-adjacent to the single-carrier subband is equal to a number of subcarriers of the multi-carrier subband non-adjacent to the single-carrier subband, and the number of data of the first sequence corresponding to the single-carrier subband is equal to a number of subcarriers of the multi-carrier subband.

In some embodiments, within a same time length, a number of data of the M first sequences is the same.

In some embodiments, within a time-domain symbol length, the number of data of the first sequence corresponding to the single-carrier subband is 2 to the power of i, where i is an integer greater than or equal to 0; and a number of data of the first sequence corresponding to the multi-carrier subband non-adjacent to the single-carrier subband is 2 to the power of j, where j is an integer greater than or equal to 0.

In some embodiments, the subband is a single-carrier subband, and a center frequency point of the subband is located in the middle of the single-carrier subband.

In some embodiments, the processing module 21, is configured to, in a case where only a side of the multi-carrier subband adjacent to the single-carrier subband is adjacent to the single-carrier subband, performing the zero-padding operation on the side adjacent to the single-carrier subband, of the first sequence corresponding to the multi-carrier subband adjacent to the single-carrier subband; or in a case where both sides of the multi-carrier subband adjacent to the single-carrier subband are adjacent to the single-carrier subband respectively, performing the zero-padding operation on the both sides of the first sequence corresponding to the multi-carrier subband adjacent to the single-carrier subband.

In some embodiments, a number of zeros of the zero-padding operation is positively correlated with a roll-off factor of a filter of the single-carrier subband adjacent to, the multi-carrier subband adjacent to the single-carrier subband.

In some embodiments, data in the first sequence corresponding to the multi-carrier subband adjacent to the single-carrier subband is mapped onto a subcarrier that is non-adjacent to the single-carrier subband within the multi-carrier subband adjacent to the single-carrier subband, and data mapped onto a subcarrier that is adjacent to the single-carrier subband within the multi-carrier subband adjacent to the single-carrier subband is 0.

In some embodiments, the first inverse Fourier transform is a transform performed on data within a time-domain symbol of the first sequence.

In some embodiments, the first inverse Fourier transform is an oversampled inverse Fourier transform.

In some embodiments, a number of transform points of the first inverse Fourier transform satisfies 2 to the power of i, and i is an integer greater than or equal to 0.

In some embodiments, in a case where subcarrier spacings of two subbands are the same, the first inverse Fourier transform performed on first sequences corresponding to the two subbands adopt a same number of transform points.

In some embodiments, a zero-frequency position of the first inverse Fourier transform performed on the first sequence is located within a subband corresponding to the second sequence, or a zero-frequency position of the first inverse Fourier transform performed on the first sequence is located on a subcarrier within a subband corresponding to the first sequence.

In some embodiments, the processing module 21, is configured to perform processing on the M first sequences, to obtain M third sequences, where a length of the third sequence is twice a length of a first sequence corresponding to a single carrier; and perform a second inverse Fourier transform on the K second sequences and the M third sequences, to obtain the time-domain data sequence.

In some embodiments, the processing module 21, is configured to perform a zero-insertion operation between two adjacent data in the first sequence, and performing a zero-insertion operation after last data in the first sequence, to obtain the third sequence.

In some embodiments, the processing module 21, is configured to perform cyclic repetition of partial data of the first sequence, to obtain a fourth sequence, where a length of the fourth sequence is twice a length of the first sequence corresponding to the single carrier; and perform an inverse Fourier transform on the fourth sequence, to obtain the third sequence.

In some embodiments, the processing module 21, is configured to perform cyclic repetition of partial data of the first sequence, to obtain a fourth sequence, where a length of the fourth sequence is less than twice the length of the first sequence corresponding to the single carrier; and perform an oversampled inverse Fourier transform on the fourth sequence, to obtain the third sequence.

In some embodiments, a number of transform points of the second inverse Fourier transform is greater than N.

In some embodiments, the processing module 21, is configured to acquire P sixth sequences, where P is a positive integer; and perform the second inverse Fourier transform on the K second sequences, the M third sequences, and the P sixth sequences together, to obtain the time-domain data sequence.

In some embodiments, the processing module 21, is configured to arrange the K second sequences and the M third sequences in rows, to obtain a data matrix; extract a plurality of seventh sequences from the data matrix by columns, where each seventh sequence contains N data; perform the second inverse Fourier transform on the plurality of seventh sequences respectively, to obtain a plurality of time-domain data subsequences; and constitute the time-domain data sequence with the plurality of time-domain data subsequences.

In some embodiments, the time-domain data sequence is constituted by concatenating the plurality of time-domain data subsequences.

In some embodiments, a concatenation interval between two time-domain data subsequences is half of a length of the time-domain data subsequence.

In some embodiments, the processing module 21, is further configured to perform a filtering operation and/or a windowing operation on the time-domain data sequence, where the filtering operation is single-phase filtering or polyphase filtering.

In some embodiments, the filtering operation satisfies at least one of: a coefficient of a filter corresponding to the filtering operation being a preset value; or a width of a filter corresponding to the filtering operation being equal to a bandwidth of a subband corresponding to the filtering operation.

In some embodiments, the to-be-transmitted data includes modulated data and/or reference signal data.

In some embodiments, in a case where the to-be-transmitted data includes the reference signal data, the N first sequences carry the reference signal data.

In some embodiments, a channel bandwidth contains W subbands, each subband has a same width, the each subband may be a single-carrier subband and a multi-carrier subband, M subbands are single-carrier data, N-M subbands are multi-carrier subbands, where W ≥ N.

Within an OFDM symbol time length, a number of data in a group of multi-carrier first sequences adjacent to a single carrier is less than a number of subcarriers in a subband in which multi-carrier data is located; a number of data in a group of multi-carrier first sequences not adjacent to the single carrier is equal to the number of subcarriers in the subband in which the multi-carrier data is located; a number of data in a single carrier first sequence is equal to the number of subcarriers in the subband in which the multi-carrier data is located.

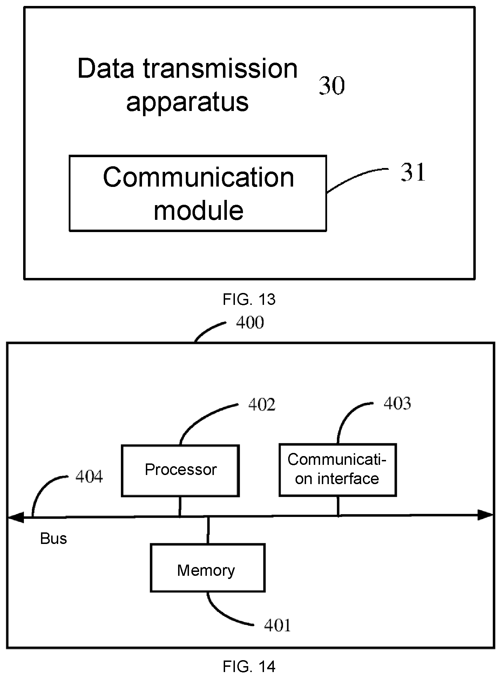

FIG. 13 is another data transmission apparatus provided by the embodiments of the present disclosure. The data transmission apparatus 30 includes: a communication module 31;
the communication module 31, configured to transmit a time-domain data sequence on a transmission resource of to-be-transmitted data;
data is transmitted on a channel bandwidth; where the channel bandwidth includes W subbands, among the W subbands, M subbands are single-carrier subbands, K subbands are multi-carrier subbands, M is less than or equal to N, N is less than or equal to W, K is equal to N-M, and N, W, M are all positive integers; and
within a time-domain symbol length, a number of data in a first sequence corresponding to a multi-carrier subband adjacent to a single-carrier subband is less than a number of subcarriers of the multi-carrier subband; a number of data in a first sequence corresponding to a multi-carrier subband non-adjacent to a single-carrier subband is equal to a number of subcarriers of the multi-carrier subband; and a number of data in a first sequence corresponding to the single-carrier subband is equal to the number of subcarriers of the multi-carrier subband.

In a case where the functions of the above integrated modules are implemented in the form of hardware, the embodiments of the present disclosure further provide a structure of a communication apparatus, and the communication apparatus is configured to perform the data transmission method provided in the embodiments of the present disclosure. As shown in FIG. 14, the communication apparatus 400 includes: a communication interface 403, a processor 402, and a bus 404. In some embodiments, the communication apparatus may further include a memory 401.

The processor 402 may implement or perform various exemplary logical blocks, modules and circuits described in conjunction with the embodiments of the present disclosure. The processor 402 may be a central processing unit, a general-purpose processor, a digital signal processor, an application specific integrated circuit, a field programmable gate array or other programmable logic devices, a transistor logic device, a hardware component or any combination thereof. The processor 402 may implement or perform various exemplary logical blocks, modules and circuits described in conjunction with the embodiments of the present disclosure. The processor 402 may also be a combination capable of implementing computing functions, for example, containing a combination of one or more microprocessors, or a combination of a digital signal processor (DSP) and a microprocessor.

The communication interface 403 is configured to connect with other devices via a communication network. The communication network may be an Ethernet, a radio access network, a wireless local area network (WLAN), or the like.

The memory 401 may be, but is not limited to, a read-only memory (ROM) or any other type of static storage device capable of storing static information and instructions, a random access memory (RAM) or any other type of dynamic storage device capable of storing information and instructions, or an electrically erasable programmable read-only memory (EEPROM), a magnetic disk storage medium or any other magnetic storage device, or any other medium capable of being used to carry or store desired program codes and capable of being accessed by a computer, where the desired program codes have instructions or are in the form of data structure.

As an implementation, the memory 401 may exist independently of the processor 402, and the memory 401 may be connected to the processor 402 and is used for storing instructions or program codes. The processor 402, when calling and executing the instructions or program codes stored in the memory 401, is capable of implementing the data transmission method provided by the embodiments of the present disclosure.

In another implementation, the memory 401 may also be integrated with the processor 402.

The bus 404 may be an extended industry standard architecture (EISA) bus or the like. Buses 404 may be divided into address buses, data buses, control buses, and the like. For ease of representation, only one bold line is used for the representation in FIG. 14, but it does not mean that there is only one bus or one type of the bus.

Some embodiments of the present disclosure provide a computer readable storage medium (e.g., a non-transitory computer readable storage medium), and the computer readable storage medium has stored computer program instructions therein, and the computer program instructions, upon being executed on a computer, enable the computer to perform the data transmission method as described in any embodiment of the above embodiments.

In an implementation, the computer may be the above data transmission apparatus, and the present disclosure does not limit a form of the computer.

In some examples, the above computer readable storage medium may include, but is not limited to a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer readable storage media described in the embodiments of the present disclosure may represent one or more devices for storing information and/or other machine-readable storage media for storing information. The term "machine readable storage medium" may include, but is not limited to, a wireless channel and various other media capable of storing, containing, and/or carrying instructions and/or data.

The embodiments of the present disclosure provide a computer program product containing instructions, and the computer program product, upon being executed on a computer, enables the computer to perform the data transmission method as described in any embodiment of the above-mentioned embodiments.

The above descriptions are only specific implementations of the present disclosure, but the protection scope of the present disclosure is not limited thereto, any variations or replacements within the technical scope disclosed in the present disclosure shall be included in the protection scope of the present disclosure. Therefore, the protection scope of the present disclosure shall be determined based on the protection scope of the claims.

## Claims

1. A data transmission method, **characterized by** comprising:
dividing to-be-transmitted data into N first sequences; wherein, among the N first sequences, M first sequences each correspond to a single-carrier subband, K first sequences each correspond to a multi-carrier subband, N is a positive integer, M is a positive integer less than N, and K is equal to N-M; within a time-domain symbol length, a number of data of a first sequence corresponding to a multi-carrier subband adjacent to a single-carrier subband is less than a number of data of a first sequence corresponding to the single-carrier subband;
obtaining K second sequences based on the K first sequences; wherein the K second sequences comprise: a second sequence obtained by sequentially performing a zero-padding operation and a first inverse Fourier transform on the first sequence corresponding to a multi-carrier subband adjacent to the single-carrier subband, and a second sequence obtained by performing a first inverse Fourier transform on the first sequence corresponding to a multi-carrier subband non-adjacent to the single-carrier subband;
obtaining a time-domain data sequence based on the K second sequences and the M first sequences; and
transmitting the time-domain data sequence on a transmission resource of the to-be-transmitted data.

2. The method according to claim 1, wherein N subbands comprised in a transmission resource of the to-be-transmitted data are all or a part of subbands comprised in a channel bandwidth, and the N subbands are subbands corresponding to the N first sequences.

3. The method according to claim 2, wherein, in frequency domain, the N subbands satisfy at least one of:
the N subbands being arbitrarily distributed in frequency domain;
the N subbands being continuous in frequency domain;
bandwidths of the N subbands being the same; or
M single-carrier subbands among the N subbands being non-continuous in frequency domain.

4. The method according to claim 1, wherein both sides of the multi-carrier subband are adjacent to two single-carrier subbands, and the multi-carrier subband is used for transmitting data, or the multi-carrier subband is not used for transmitting data.

5. The method according to claim 1, wherein, within a time-domain symbol length, the number of data of the first sequence corresponding to the multi-carrier subband adjacent to the single-carrier subband is less than a number of data of the first sequence corresponding to the multi-carrier subband non-adjacent to the single-carrier subband, and the number of data of the first sequence corresponding to the multi-carrier subband non-adjacent to the single-carrier subband is equal to the number of data of the first sequence corresponding to the single-carrier subband.

6. The method according to claim 1, wherein, within a time-domain symbol length, the number of data of the first sequence corresponding to the multi-carrier subband adjacent to the single-carrier subband is less than a number of subcarriers of the multi-carrier subband adjacent to the single-carrier subband, a number of data of the first sequence corresponding to the multi-carrier subband non-adjacent to the single-carrier subband is equal to a number of subcarriers of the multi-carrier subband non-adjacent to the single-carrier subband, and the number of data of the first sequence corresponding to the single-carrier subband is equal to a number of subcarriers of the multi-carrier subband.

7. The method according to claim 1, wherein, within a same time length, a number of data of the M first sequences is the same.

8. The method according to claim 1, wherein, within a time-domain symbol length, the number of data of the first sequence corresponding to the single-carrier subband is 2 to the power of i, wherein i is an integer greater than or equal to 0; and a number of data of the first sequence corresponding to the multi-carrier subband non-adjacent to the single-carrier subband is 2 to the power of j, wherein j is an integer greater than or equal to 0.

9. The method according to claim 1, wherein the subband is a single-carrier subband, and a center frequency point of the subband is located in the middle of the single-carrier subband.

10. The method according to claim 1, wherein performing the zero-padding operation on the first sequence corresponding to the multi-carrier subband adjacent to the single-carrier subband, comprises:
in a case where only a side of the multi-carrier subband adjacent to the single-carrier subband is adjacent to the single-carrier subband, performing the zero-padding operation on the side adjacent to the single-carrier subband, of the first sequence corresponding to the multi-carrier subband adjacent to the single-carrier subband; or
in a case where both sides of the multi-carrier subband adjacent to the single-carrier subband are adjacent to the single-carrier subband respectively, performing the zero-padding operation on the both sides of the first sequence corresponding to the multi-carrier subband adjacent to the single-carrier subband.

11. The method according to claim 10, wherein a number of zeros of the zero-padding operation is positively correlated with a roll-off factor of a filter of the single-carrier subband adjacent to, the multi-carrier subband adjacent to the single-carrier subband.

12. The method according to claim 1, wherein data in the first sequence corresponding to the multi-carrier subband adjacent to the single-carrier subband is mapped onto a subcarrier that is non-adjacent to the single-carrier subband within the multi-carrier subband adjacent to the single-carrier subband, and data mapped onto a subcarrier that is adjacent to the single-carrier subband within the multi-carrier subband adjacent to the single-carrier subband is 0.

13. The method according to claim 1, wherein the first inverse Fourier transform is a transform performed on data within a time-domain symbol of the first sequence.

14. The method according to claim 1, wherein the first inverse Fourier transform is an oversampled inverse Fourier transform.

15. The method according to claim 1, wherein a number of transform points of the first inverse Fourier transform satisfies 2 to the power of i, and i is an integer greater than or equal to 0.

16. The method according to claim 1, wherein in a case where subcarrier spacings of two subbands are the same, the first inverse Fourier transform performed on first sequences corresponding to the two subbands adopt a same number of transform points.

17. The method according to claim 1, wherein a zero-frequency position of the first inverse Fourier transform performed on the first sequence is located within a subband corresponding to the second sequence, or a zero-frequency position of the first inverse Fourier transform performed on the first sequence is located on a subcarrier within a subband corresponding to the first sequence.

18. The method according to claim 1, wherein obtaining the time-domain data sequence based on the K second sequences and the M first sequences, comprises:
performing processing on the M first sequences, to obtain M third sequences, wherein a length of the third sequence is twice a length of a first sequence corresponding to a single carrier; and
performing a second inverse Fourier transform on the K second sequences and the M third sequences, to obtain the time-domain data sequence.

19. The method according to claim 18, wherein performing processing on the M first sequences to obtain the M third sequences, comprises:
performing a zero-insertion operation between two adjacent data in the first sequence, and performing a zero-insertion operation after last data in the first sequence, to obtain the third sequence.

20. The method according to claim 18, wherein performing processing on M first sequences to obtain the M third sequences, comprises:
performing cyclic repetition of partial data of the first sequence, to obtain a fourth sequence, wherein a length of the fourth sequence is twice a length of the first sequence corresponding to the single carrier; and
performing an inverse Fourier transform on the fourth sequence, to obtain the third sequence.

21. The method according to claim 18, wherein performing processing on the M first sequences to obtain the M third sequences, comprises:
performing cyclic repetition of partial data of the first sequence, to obtain a fourth sequence, wherein a length of the fourth sequence is less than twice the length of the first sequence corresponding to the single carrier; and
performing an oversampled inverse Fourier transform on the fourth sequence, to obtain the third sequence.

22. The method according to claim 18, wherein performing the second inverse Fourier transform on the K second sequences and the M third sequences to obtain the time-domain data sequence, comprises:
acquiring P sixth sequences, wherein P is a positive integer; and
performing the second inverse Fourier transform on the K second sequences, the M third sequences, and the P sixth sequences together, to obtain the time-domain data sequence.

23. The method according to claim 18, wherein performing the second inverse Fourier transform on the K second sequences and the M third sequences to obtain the time-domain data sequence, comprises:
arranging the K second sequences and the M third sequences in rows, to obtain a data matrix;
extracting a plurality of seventh sequences from the data matrix by columns, wherein each seventh sequence among the plurality of seventh sequences comprises N data;
performing the second inverse Fourier transform on the plurality of seventh sequences respectively, to obtain a plurality of time-domain data subsequences; and
constituting the time-domain data sequence with the plurality of time-domain data subsequences.

24. The method according to claim 23, wherein the time-domain data sequence is constituted by concatenating the plurality of time-domain data subsequences.

25. The method according to claim 23, wherein a concatenation interval between two time-domain data subsequences is half of a length of the time-domain data subsequence.

26. The method according to claim 1, wherein before transmitting one time-domain data sequence on the transmission resource of the to-be-transmitted data, the method further comprises:
performing a filtering operation and/or a windowing operation on the time-domain data sequence, wherein the filtering operation is single-phase filtering or polyphase filtering.

27. The method according to claim 26, wherein the filtering operation satisfies at least one of:
a coefficient of a filter corresponding to the filtering operation being a preset value; or
a width of a filter corresponding to the filtering operation being equal to a bandwidth of a subband corresponding to the filtering operation.

28. The method according to claim 1, wherein the to-be-transmitted data comprises modulated data and/or reference signal data.

29. The method according to claim 28, wherein, in a case where the to-be-transmitted data comprises the reference signal data, the N first sequences carry the reference signal data.

30. A data transmission method, **characterized by** comprising:
transmitting data on a channel bandwidth; wherein the channel bandwidth comprises W subbands, among the W subbands, M subbands are single-carrier subbands, K subbands are multi-carrier subbands, M is less than or equal to N, N is less than or equal to W, K is equal to N-M, and N, W, M are all positive integers; and
within a time-domain symbol length, a number of data in a first sequence corresponding to a multi-carrier subband adjacent to a single-carrier subband is less than a number of subcarriers of the multi-carrier subband; a number of data in a first sequence corresponding to a multi-carrier subband non-adjacent to a single-carrier subband is equal to a number of subcarriers of the multi-carrier subband; and a number of data in a first sequence corresponding to the single-carrier subband is equal to the number of subcarriers of the multi-carrier subband.

31. A communication apparatus, **characterized by** comprising: a memory and a processor; wherein the memory is coupled with the processor; the memory is configured to store instructions executable by the processor; and the processor, upon executing the instructions, performs the method according to any one of claims 1 to 30.

32. A computer readable storage medium, **characterized in that** the computer readable storage medium has stored computer instructions thereon, and the computer instructions, upon being executed on a communication apparatus, enable the communication apparatus to perform the method according to any one of claims 1 to 30.
